# EUROPÄISCHE PATENTANMELDUNG

(11) **EP 3 881 683 A1**
(43) Veröffentlichungstag der Anmeldung: **22.09.2021**
(21) Anmeldenummer: 21163728.5
(22) Anmeldetag: 19.03.2021
(51) Int. Cl.: A23K 10/38, A23J 1/00, C11B 13/00, C12F 3/10

(54) **VERFAHREN ZUR GEWINNUNG VON ÖL AUS DÜNNSCHLEMPE UND EINE VERWENDUNG EINER VORRICHTUNG**

(30) Priorität: 20.03.2020 DE 102020107799
(71) Anmelder: GEA Mechanical Equipment GmbH, 59302 Oelde (DE)
(72) Erfinder: SCHIEMANN, Burkhard, 59302 Oelde (DE); EMANUELE, Mario, 59302 Oelde (DE)
(74) Vertreter: Specht, Peter

(57) **Zusammenfassung**

Ein Verfahren zur Gewinnung von Öl aus Dünnschlempe in einer Vorrichtung zur Verarbeitung von Dünnschlempe, wobei das Verfahren die folgenden Schritte aufweist:
a) Zuführen von Dünnschlempe zu der Vorrichtung
b) Aufkonzentrieren von Dünnschlempe in einer Filtrationsanlage der Vorrichtung;
c) wobei nach dem Aufkonzentrieren von Dünnschlempe eine zentrifugale Trennung zumindest eines Teilstroms der aufkonzentrierten Dünnschlempe in drei Phasen erfolgt, umfassend eine proteinhaltige Feststoffphase, eine Ölphase und eine wässrige Flüssigphase,
sowie eine Verwendung einer Vorrichtung zur Durchführung eines Verfahrens

## Beschreibung

Die vorliegende Erfindung betrifft ein Verfahren zur Gewinnung von Öl aus einer Dünnschlempe und die Verwendung einer Vorrichtung zur Durchführung des Verfahrens.

In der US 8,008,517 B2 wird ein Verfahren offenbart in welchem Getreideschlempe aus Mais, Weizen und/oder Triticale mittels eines Dekanters in Dünn- und Dickschlempe getrennt wird.

Die Dickschlempe besteht vorwiegend aus den Getreidefasern, Proteinen, Wasser und in Wasser gelösten Salzen. Die Dünnschlempe besteht vorwiegend aus Proteinen, Wasser, in Wasser gelösten Salzen und Öl.

Die Dünnschlempe wird einem Verdampfer zugeführt, um den Wassergehalt weiter abzusenken und eine Aufkonzentrierung des Öles zu erreichen. Die so eingedampfte Dünnschlempe wird als Sirup bezeichnet und weist eine hohe Konzentration an Proteinen auf. Nach der Eindampfung wird das Öl weitgehend aus dem Sirup mittels eines Trennseparators abgetrennt.

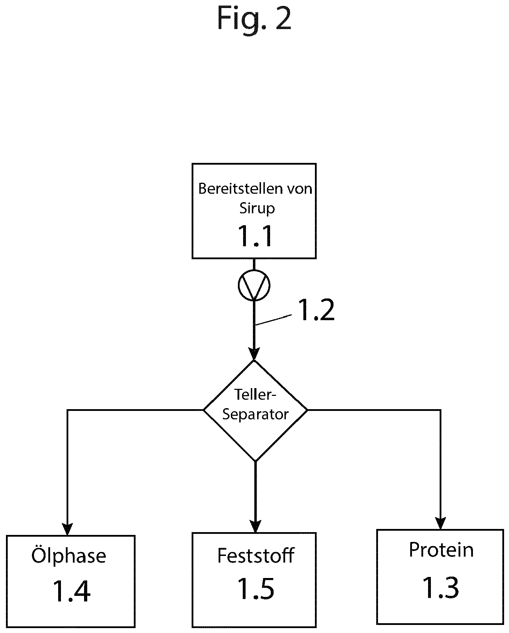

Der weitgehend entölte Sirup wird sodann mit der zuvor dekantierten Dickschlempe (Fasern) vermischt und zu DDGS (Dried Distillers Grain with Solubles) getrocknet.
Versuche (siehe Fig. 2) haben gezeigt, dass in dem oben beschriebenen Standardverfahren eine Ölausbeute von ca. 93,9 % erreicht werden kann. Das bedeutet, dass das im eingedampften Sirup enthaltene Öl im beschriebenen Verfahren mittels Trennseparator nicht vollständig abgetrennt werden kann. Es verbleibt ein Restölanteil, der für die weitere Verwendung und Aufarbeitung des Sirups störend sein kann.

In der EP 2 481 293 B1 wird ein Verfahren beschrieben, in welchem mit einem Dekanter eine Dünnschlempe (thin stillage) aus einer Getreideschlempe (whole stillage) abgetrennt wird. In einer anschließenden Filtrationsstufe wird Flüssigkeit (Permeat) von der Dünnschlempe abgetrennt. Die verbleibende Phase (Retentat), in der sowohl Protein als auch Öl enthalten sind, wird zum Teil rezirkuliert und zum Teil einem Separator zugeführt. Dieser trennt die Dünnschlempe in zwei Phasen auf. Das Öl wird zusammen mit dem Protein abgetrennt und wird zu Futterpellets weiterverarbeitet.

Die WO 2012/145 230 A1 offenbart ein Verfahren zur Aufarbeitung von Dünnschlempe mit einer theoretischen Ölausbeute gemäß Abs.0046 von mehr als 95%, insbesondere mehr als 97%. Wie aus der Tabelle 1 hervorgeht ist die tatsächliche Ölausbeute 98%. In Tabelle 2 werden theoretisch-erreichbare Ölausbeuten von bis zu 99% offenbart. Darüber hinaus gibt es allerdings keine Angaben oder Anregungen das Verfahren weitergehend zu verbessern, um Öl mit besonders hoher Reinheit zu gewinnen.

Ausgehend von der vorgenannten Vorbetrachtung ist es die Aufgabe der vorliegenden Erfindung ein Verfahren zur Gewinnung von Öl aus Dünnschlempe mit einer hohen Ölausbeute bereitzustellen.

Die vorliegende Erfindung löst diese Aufgabe durch das Bereitstellen eines Verfahrens mit den Merkmalen des Anspruchs 1.

Ein erfindungsgemäßes Verfahren zur Gewinnung von Öl aus Dünnschlempe erfolgt in einer Vorrichtung zur Verarbeitung von Dünnschlempe.

Das erfindungsgemäße Verfahren weist dabei die folgenden Schritte auf:
a) Zuführen von Dünnschlempe zu der Vorrichtung, insbesondere zu einem Arbeitsbehälter

Das Zuführen von Dünnschlempe kann als vorbereitender Schritt zudem die Auftrennung von Getreideschlempe, insbesondere als nachgelagerten Schritt einer Ethanoldestillation, in eine faserhaltige Dickschlempe und eine im Wesentlichen faserfreie Dünnschlempe durch einen Dekanter umfassen.

Die derart bereitgestellte Dünnschlempe wird sodann von dem vorgenannten Dekanter in die Vorrichtung überführt.
b) Aufkonzentrieren von Dünnschlempe in einer Filtrationsanlage der Vorrichtung;

Das Aufkonzentrieren kann besonders bevorzugt in einer Filtrationsanlage erfolgen.
c) wobei nach dem Aufkonzentrieren von Dünnschlempe eine zentrifugale Trennung zumindest eines Teilstroms der aufkonzentrierten Dünnschlempe in drei Phasen erfolgt, umfassend eine proteinhaltige Feststoffphase, eine Ölphase und eine wässrige Flüssigphase.

Die Trennung kann insbesondere mittels eines einzigen Dreiphasen-Separators und besonders bevorzugt in einem einzigen Verfahrensschritt durchgeführt werden.

In der US 8,008,517 B2 wurde beschrieben, dass Versuche Öl als Wertprodukt aus Dünnschlempe zurückzugewinnen ökonomisch ineffizient waren und daher nicht erfolgreich waren. Dies wurde auf eine Emulsionsbildung rückgeführt. Es wurde davon ausgegangen, dass eine Vielzahl von Zentrifugen zur Abtrennung von Öl aus der Dünnschlempe erforderlich wären.

Die vorliegende Erfindung überkommt dieses technische Vorurteil durch Integration eines zentrifugalen Trennschrittes an einer bestimmten Stelle bei der Aufarbeitung einer Dünnschlempe.

Vorteilhafte Ausgestaltungen der Ansprüche sind Gegenstand der Unteransprüche.

Bevorzugt erfolgt das Zuführen von Dünnschlempe in Schritt a) in einen Arbeitsbehälter, wobei nach dem Aufkonzentrieren von Dünnschlempe in Schritt b) eine Strömungsteilung der aufkonzentrierten Dünnschlempe in zumindest einen ersten Teilstrom und einen zweiten Teilstrom erfolgt, wobei im Anschluss an die Strömungsteilung ein Rückführen des ersten Teilstroms an aufkonzentrierter Dünnschlempe zu der in den Arbeitsbehälter befindlichen Dünnschlempe zur Einstellung eines Gehaltes an Trockensubstanz erfolgt.

Diese technische Lehre kann auch der EP 2 481 293 B1 entnommen werden. Es hat sich allerdings gezeigt, dass die vorgenannte Einstellung des Gehaltes an Trockensubstanz auch die nachfolgende zentrifugale Trennung von Öl als separate Flüssigphase positiv beeinflusst.

Die zentrifugale Trennung (in Schritt c) kann bevorzugt in einem einzigen Schritt erfolgen und mittels eines, insbesondere eines einzigen, Dreiphasen-Separators durchgeführt werden.

Die Temperatur der Dünnschlempe kann während der zentrifugalen Trennung in Schritt c) zwischen 70 und 90°C besonders bevorzugt zwischen 80-83 °C betragen. Es hat sich gezeigt, dass bei dieser Temperatur eine besonders hohe Trenneffizienz erreicht werden kann. Zur Temperierung der Dünnschlempe in den einzelnen Verfahrensschritten kann vorteilhaft eine Heizvorrichtung, vorzugsweise ein Wärmetauscher, eingesetzt werden.

Weiterhin erfolgt das Aufkonzentrieren in Schritt b) durch eine Filtration, vorzugsweise durch eine Ultrafiltration, insbesondere durch eine Ultrafiltration mit Hilfe einer keramischen Filtermembran, wobei die Temperatur der Dünnschlempe (DS) während der Filtration zwischen 70 und 90°C besonders bevorzugt zwischen 80-83 °C °C beträgt.

Der Dreiphasen-Separator zur zentrifugalen Trennung in Schritt c) kann insbesondere ein Tellerpaket aufweisen. Obgleich ein Tellerpaket an sich bekannt ist, hat sich gezeigt, dass für die spezielle Trennaufgabe im vorliegenden Verfahren ein Tellerpaket in der Lage ist eine erhöhte Abscheidung von Öl trotz der Tendenz der Komponenten im Gemisch zur Emulsionsbildung zu erreichen. Der Dreiphasen-Separator kann besonders bevorzugt dabei zur zentrifugalen Trennung in Schritt c) eine äquivalente Klärfläche von 2.000 bis 200.000 m² aufweist. Die vorgenannte Klärfläche kann durch die Anzahl der Trennteller und deren Oberfläche eingestellt werden.

Der Dreiphasen-Separator zur zentrifugalen Trennung in Schritt c) kann vorteilhaft bei einer G-Zahl zwischen 1.500 und 15.000 betrieben werden. Die Beschleunigung ist dabei derart gewählt, dass eine effiziente Abtrennung ohne Emulsionsbildung durch den vorgenannten Separator möglich ist.

Bei der zentrifugalen Trennung in Schritt c) kann vorteilhaft eine diskontinuierliche Entleerung des abgetrennten Feststoffes zur Weiterverarbeitung erfolgen.

Zur Steuerung der diskontinuierlichen Entleerung kann der Feststoffgehalt in der Ölphase und/oder der geklärten wässrigen Flüssigphase überwacht werden. Alternativ oder zusätzlich kann auch die Trübung in zumindest einer der vorgenannten Phasen durch einen Sensor überwacht werden. Die so ermittelten Istwerte werden mit vorgegebenen Sollwerten in einer Steuerungseinheit verglichen und bei Bedarf werden Entleerungen ausgelöst.

Ein Protein kann als weiterer Wertstoff aus der proteinhaltigen Feststoffphase (F) gewonnen werden. Proteine können beispielsweise pH-wertabhängig aufgelöst und abermals rein ausgefällt werden. Es kommt auch eine selektive Fällung unterschiedlicher Proteine nach pH-Wert und Löslichkeit in Betracht.

Weiterhin erfindungsgemäß ist die Verwendung einer Vorrichtung zur Durchführung eines Verfahrens nach einem der vorgenannten Ansprüche, zur Gewinnung von Öl mit einer Ölausbeute von mehr als 99,5 Gew.%, bezogen auf den Ölgehalt in der eingesetzten Dünnschlempe, wobei die Vorrichtung zumindest eine Ultrafiltrationsanlage und einen der Ultrafiltrationsanlage nachgeschalteten Dreiphasen-Separator umfasst.

Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:
Fig. 1 schematische Darstellung einer Vorrichtung zur Durchführung des erfindungsgemäßen Verfahrens;
Fig. 2 schematische Darstellung des Verfahrensablaufs eines Referenzversuchs nach dem Stand der Technik (US 8,008,517 B2); und
Fig. 3 schematische Darstellung des erfindungsgemäßen Verfahrensablaufs.

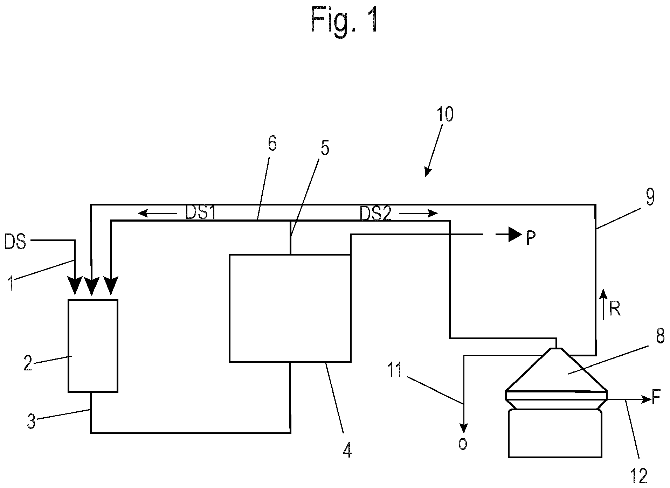

Fig. 1 zeigt eine Vorrichtung 1 zur Verarbeitung einer Dünnschlempe zur Gewinnung von Öl aus der besagten Dünnschlempe. Dünnschlempe als Ausgangsstoff des Verfahrens kann beispielsweise bei der Verarbeitung einer Getreideschlempe (whole stillage) WS, beispielsweise im Anschluss an eine Ethanoldestillation von Mais oder anderen Getreidesorten, entstehen.

Die vorgenannte Schlempe weist typischerweise einen Trockensubstanzgehalt von etwa 10 Gew.-% auf, wobei etwa 7 Gew.-% auf suspendierte Feststoffe und 3 Gew.-% auf gelöste Feststoffe entfallen. Die Schlempe kann in einem Dekanter zu Dickschlempe (wet grains) WG und Dünnschlempe (thin stillage) DS weiterverarbeitet.

Der Anteil an Trockensubstanz in der sogenannten Dünnschlempe DS beträgt dabei typischerweise etwa 4,15 Gew.-%, bezogen auf die Gesamtmasse der Dünnschlempe DS, wobei etwa 1,15 Gew.-% auf suspendierte Feststoffe entfallen und etwa 3 Gew.-% auf gelöste Feststoffe. Der Anteil an Trockensubstanz in der Dickschlempe WG ist demgegenüber größer als 30 Gew.-%, bezogen auf die Gesamtmasse der Dickschlempe WG. Im Anschluss kann die Trägerflüssigkeit der Dickschlempe, meist Wasser, weitestgehend verdampft werden, so dass sich ein nährstoffreicher Feststoff, die sog. Trockenschlempe (Dried Destillers Grains with Solubles) DDGS, bildet, welche u.a. als Futtermittel für die Tierhaltung eingesetzt wird.

Die Dünnschlempe DS wird über einem Zulauf 1 eines Arbeitsbehälters 2 weitergeleitet. An dieser Stelle setzt das erfindungsgemäße Verfahren an, in welchem neben einem proteinhaltigen Feststoff zusätzlich qualitativ-hochwertiges Öl gewonnen wird. Hierfür wird in Fig. 1 die Vorrichtung 10 mit dem entsprechenden Arbeitsbehälter 2 bereitgestellt.

Der Arbeitsbehälter 2 verfügt über zwei weitere Zuläufe, über welche Produktphasen, z.B. Dünnschlempe oder Fugatphase, aus dem weiteren Prozessschritten in den Arbeitsbehälter 2 rückgeführt werden.

Der Arbeitsbehälter 2 weist zudem einen Ablauf 3 auf, welcher den Arbeitsbehälter 2 mit einer Filtrationsanlage 4 verbindet, so dass die Dünnschlempe zur Filtrationsanlage 4 überführbar ist. Weitere Pumpen und Ventile, einschließlich entsprechender Steuerungen können vorgesehen sein und können vom Fachmann an bevorzugte Stellen in der Vorrichtung 10 zur Steuerung des Prozesses eingesetzt werden.

Die Filtrationsanlage 4 kann als Ultrafiltrationsanlage ausgestaltet sein mit mehreren Filtrationsmodulen. Weiterhin kann eine sogenannte Kreislaufpumpe als Teil der Filtrationsanlage vorgesehen sein, sowie ggf. eine Kühlvorrichtung.

Alternativ kann der Arbeitsbehälter auch Teil der Filtrationsanlage 4 sein.

Während der Filtration wird Flüssigkeit aus der Dünnschlempe abgezogen und als Permeat P abgeführt. Ein Filtermodul der Filtrationsanlage kann als Anordnung mit keramischen Membranfilterstäben ausgebildet sein, welche in Längsrichtung mit parallelverlaufenden Kanälen durchsetzt sind. Eine in den Filtermodulen eingesetzte Filtermembran kann dabei eine durchschnittliche Porengröße von mehr als 50 nm aufweisen.

Nach der Filtration verlässt eine aufkonzentrierte Dünnschlempe als Retentat die Ultrafiltrationsanlage und wird in zwei Teilströme DS1 und DS2 aufgeteilt. Der Ablauf 5 der Filtrationsanlage 4 teilt sich in zwei Teilleitungen 6 und 7 auf, so dass eine Strömungsteilung an dieser Stelle erfolgt. Ein erster Teilstrom DS1 kann über die Teilleitung 6 an den Arbeitsbehälter 2 rückgeführt werden.

Ein zweiter Teilstrom an Retentat bzw. aufkonzentrierter Dünnschlempe DS2 wird über die Teilleitung 7 einem Dreiphasen-Separator, zugeführt. Der Umfang des Teilstromes kann durch Mittel zur Strömungsteilung, z.B. ein Ventil beispielsweise in Abhängigkeit von der Durchflussrate geregelt werden. Ventile und Pumpen sind in Fig. 1 nicht dargestellt. Der Fachmann wird sie an Stellen, an welchen sie zur Prozesssteuerung sinnvoll sind, nach Bedarf einsetzen.

Im Separator 8 wird das in der Ultrafiltration erzeugte Retentat auf einen Trockensubstanzgehalt von vorzugsweise größer als 12 Gew.-% aufkonzentriert. Am ersten Ablauf des Separators wird eine geklärte Flüssigkeit als Fugat R abgeführt. In einem zweiten Ablauf 11 wird ein Öl O abgeführt. Der Ablauf der geklärten Flüssigkeit R ist vorteilhaft als Rückführung 9 in den Arbeitsbehälter 2 ausgebildet.

Das Fugat R kann über die vorgenannte Rückführung 9 von der Zentrifuge 8 in den Arbeitsbehälter 2 rückgeführt werden. Die Feststoff F am Feststoffablauf 12 bzw. die abgeschleuderte Phase weist einen Trockensubstanzgehalt von mehr als 12 Gew.-%, vorzugsweise bis zu 20 Gew.-% auf, und wird anschließend mit einer hier nicht dargestellten Trocknungsvorrichtung zu einem transport- und lagerfähigen Produkt verarbeitet.

Die Dünnschlempe DS1 und die geklärte Flüssigkeit R kann im Arbeitsbehälter 2 mit der Dünnschlempe vom Dekanter aus dem Zulauf vermischt werden, so dass ein Trockensubstanzgehalt für die Dünnschlempe im Arbeitsbehälter 2 von etwa 11 Gew.-% eingestellt werden kann.

Es hat sich gezeigt, dass durch die Aufkonzentrierung der Dünnschlempe DS auf einen Trockensubstanzgehalt von etwa 11% der optimale Betriebspunkt für eine Ultrafiltrationsanlage 4 bei der Verarbeitung von Dünnschlempe erreicht wird.

Bei der Weiterverarbeitung von Schlempe, welche z.B. bei der Destillation von Ethanol aus Mais abfällt, kann durch den Einsatz eines Dreiphasenseparators Öl als weiterer Wertstoff das Öl aus der Dünnschlempe gewonnen werden.

Anders als im Stand der Technik, z.B. der US8008517B2, behauptet, wurde durch einen Versuch gezeigt, dass die direkte Entölung der nicht eingedampften Dünnschlempe mittels eines Separators möglich ist, und zwar mit einer Ölausbeute von 98,4%.

Somit ist es mit dem vorliegenden Verfahren möglich eine weitere Wertphase, nämlich Öl, aus der Schlempe zu gewinnen.

Nachfolgend erfolgt eine Versuchsbeschreibung mit der vorgenannten Vorrichtung.

Die Ölfraktion in der Dünnschlempe wurde mit der Membrananlage von sichtbaren Spuren auf eine messbare Menge aufkonzentriert. Die Ultrafiltrationsanlage wurde mit einer Keramikmembran betrieben.

Ein vollständiger Rückhalt des Öls ist durch die Filtrationsanlage gegeben. Es wurden keine messbare Ölmenge durch die Membrananlage ausgeschleust.

Die Ölfraktion konnte aus dem produzierten Rententat mittels des Dreiphasen-Separators vollständig abgetrennt werden. Die Ölausbeute betrug hierbei 99,997% und war somit deutlich besser als dies im Stand der Technik beschrieben wurde.

Weitere Vorteile des so hergestellten Proteins in der verbleibenden feststoffhaltigen Phase ergeben sich aus der nachfolgenden Beschreibung.

Fig. 2 zeigt eine nicht-erfindungsgemäße Abfolge von Verfahrensschritten, welche als Ergebnisse in Tabelle 1 wiedergegeben wird.

Sirup, umfassend Protein und Öl wird in Schritt 1.1 mit einem Gesamtfeststoffgehalt von ca. 40 % w/w bereitgestellt und wird einem Trennseparator vom Typ SB 7-03-076 zugeführt. Dieser Typ ist ein diskontinuierlich entleerender Tellerseparator der Anmelderin. Dieser separiert den Sirup in eine leichte Ölphase 1.4, einen Feststoff 1.5 und eine schwere Proteinphase 1.3.

Die Zulaufmenge wird in Schritt 1.2 über eine drehzahlverstellbare Monopumpe eingestellt.
Die entölte schwere Phase 1.3 umfasst einen Großteil der in Sirup befindlichen Proteine und wird über Greifer abgeführt.

Die leichte Ölphase 1.4 wird über einen freien Ablauf abgeführt.

Der Feststoff 1.5 wird nach der eingestellten Zeit entleert. Dieser Versuch wurde als Referenzversuch durchgeführt. Folgende Ergebnisse wurden gefunden:

**Tabelle 01: Referenzversuch - Zusammenstellung der Ergebnisse.**

| | 1.1 | 1.2 | 1.3 | 1.4 | 1.5 |
|---|---|---|---|---|---|
| Massenbilanz, kg | 1022,4 | | 930 | 57,4 | 35 |
| Feststoffgehalt gesamt, % w/w | 40 | | 34,9 | | 42 |
| Feststoffgehalt gelöst, % w/w | 33,2 | | 33,2 | | |
| Feststoffgehalt ungelöst, % w/w | 6,82 | | 1,7 | | |
| Fettgehalt n. Gerber, % | 19,52 | | 1,15 | | 0,1 |
| Wassergehalt n. Karl Fischer, % | | | | 0,28 | |
| | | | | | |
| Masse Feststoff, kg | 409,0 | | | | |
| Masse Öl, kg | 61,15 | | 3,73 | 57,4 | 0,0147 |
| | | | | | |
| Ölausbeute, % | 93,9 | | | | |

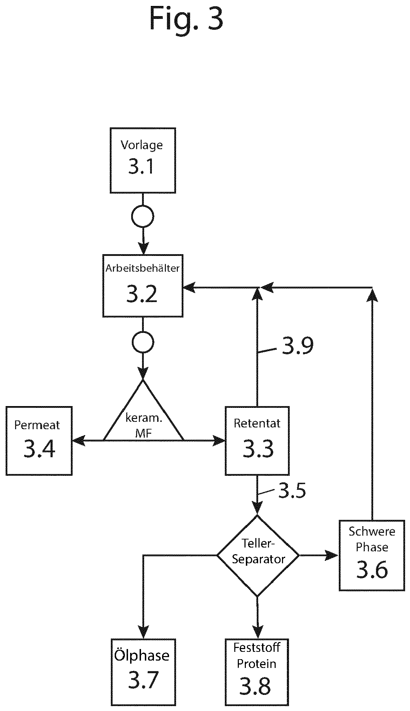

Fig. 3 zeigt einen schematischen Verfahrensablauf nach dem erfindungsgemäßen Verfahren und die dazugehörigen Ergebnisse in Tabelle 2.

Dünnschlempe mit einem Gesamtfeststoffgehalt von ca. 7 % w/w wird aus einem Vorlagebehälter 3.1 und einem Arbeitsbehälter 3.2 der keramischen Membranfiltrationsanlage zugeführt.

Die im Zulauf 3.1 enthaltene Öl- bzw. Emulsionsphase lag bei 4 % Vol. Die proteinhaltige Dünnschlempe wird durch Ultrafiltration mit einem VCF (Volumetrie Concentration Factor) von zwei aufkonzentriert.

Durch die Beschaffenheit der keramischen Membran (Porengröße: 50 nm) verbleibt das Öl vollständig im Retentat 3.3.

Im Permeat 3.4 konnte analytisch kein Öl nachgewiesen werden.

Im Loop, also im zirkulierenden Retentatstrom 3.3, kann durch die keramische Membranfiltrationsanlage eine Aufteilung des Volumenstromes durchgeführt werden. Ein Retentat-Teilvolumenstrom 3.9 wird in den Arbeitsbehälter 3.2 zurückgeführt.

Der Retentat-Teilvolumenstrom 3.5 wird zur Weiterverarbeitung an einem 3-Phasen-Trennseparator zugeführt. Der 3-Phasen-Trennseparator trennt das im Retentat-Teilvolumenstrom befindliche Öl im Rahmen einer zentrifugalen Trennung ab. Die anfallende Ölphase 3.7 wird über Greifer oder einen freien Ablauf kontinuierlich ausgetragen.

Gleichzeitig wird der im Retentat-Teilvolumenstrom 3.5 suspendierte Feststoff mit Protein im 3-Phasen-Trennseparator aufkonzentriert und diskontinuierlich als Feststoffkonzentrat 3.8 ausgetragen.

Der Fettgehalt im Feststoffkonzentrat 3.8 betrug 0,1 % und bestimmt damit die Ölausbeute des gesamten Prozesses. Damit ist die aus dem 3-Phasen-Trennseparator ausgetragene Ölphase der einzige Prozessstrom, der den Prozess verlässt und nennenswert Öl enthält.
Die entölte und von suspendierten Feststoffen befreite schwere Phase 3.6 wird in den Arbeitsbehälter 3.2 zurückgeführt. Der Ölgehalt in der schweren Phase 3.6 betrug 0,3 %.

Da erfindungsgemäß die schwere Phase 3.6 in den Arbeitsbehälter 3.2 zurückgeführt wird, stellt dieser Ölgehalt allerdings keinen Verlust dar. Die Ölausbeute des hier beschriebenen Prozesses lag bei 99,997 % und ist damit höher als die Ölausbeute des Standardprozesses und auch höher als die Ölausbeute in einer Dünnschlempe-Direkt-Entölung ohne Filtration. Diese betrug bei einem weiteren Referenzversuch 98,4 %.

**Tabelle 02: Versuch 2 - Zusammenstellung der Ergebnisse.**

| | 3.1 | 3.2 | 3.3 | 3.4 | 3.5 | 3.6 | 3.7 | 3.8 |
|---|---|---|---|---|---|---|---|---|
| Massenbilanz, kg | 97 | | 58,3 | 38,3 | 55,7 | 53,8 | 1,5 | 0,4 |
| Feststoffgeh. ges., % w/w | 7,15 | 11,09 | 11,09 | 5,14 | 11,0 9 | 11,09 | | 13 |
| Feststoffgeh. gel., % w/w | 5,24 | 5,14 | 5,14 | 5,14 | 5,14 | 5,14 | | 5,14 |
| Feststoffgeh. ungel., % w/w | 1,91 | 5,95 | 5,95 | 0 | 5,95 | 5,95 | | |
| Fettgeh. n. Gerber, % | 21,45 | 32,24 | 32,24 | 0,1 | 32,2 4 | 0,3 | | 0,1 |
| Wassergeh. K. Fischer, % | | | | | | | 0,1 | |
| | | | | | | | | |
| Masse Feststoff, kg | 6,9 | | | | | | | |
| Masse Öl, kg | 1,50 | | 2,08 | 0,00 2 | 1,99 | 0,018 | 1,5 | 0,00 005 |
| | | | | | | | | |
| Ölausbeute, % | 99,99 | | | | | | | |

Das proteinhaltige und weitgehend entölte Feststoffkonzentrat 3.8 kann mit der Dekanter- Dickschlempe vermischt werden und mittels Trockner auf eine Trockensubstanz von über 90 % w/w gebracht werden. Die Dekanter-Dickschlempe ist in Fig. 1-3 nicht dargestellt und wurde bei der Bereitstellung der Dünnschlempe aus der initialen Getreideschlempe als weiteres Produkt erzeugt.

Dieses Produkt aus Feststoffkonzentrat und Dickschlempe würde dem herkömmlichen DDGS weitgehend gleichkommen. Allerdings hätte das anfallende DDGS einen wesentlich niedrigeren Ölgehalt.

Aufgrund der besonderen Zusammensetzung des Feststoffkonzentrats (3.8), welches weitgehend ölfrei und voll faserfrei ist, kann eine separate Trocknung in einem Sprühtrockner, Wirbelschichttrockner und/oder Walzentrockner von Interesse sein.

Hierdurch kann ein faserfreies, weitgehend ölfreies und hochproteinhaltiges Produkt mit Trockensubstanzwerten von über 90 % w/w hergestellt werden, welches unter anderem ein ideales Futtermittel für die Fischzucht und Geflügelmast darstellt.

Das anfallende Permeat 3.4 aus der keramischen Membranfiltrationsanlage ist frei von suspendierten Feststoffen und auch frei von Öl.
Somit stellt dieses Permeat 3.4 ein optimales Substrat für eine anaerobe Abwasserreinigung, bzw. für eine Aufarbeitung im Biogasreaktor dar, mit gleichzeitiger Erzeugung von elektrischer Energie.

### Bezugszeichen

- 1: Zulauf
- 2: Arbeitsbehälter
- 3: Ablauf
- 4: Filtrationsanlage
- 5: Ablauf
- 6: Teilleitung
- 7: Teilleitung
- 8: Separator
- 9: Rückführung
- 10: Vorrichtung zur Verarbeitung einer Dünnschlempe
- 11: Oberlauf
- 12: Feststoffablauf

- DS: Dünnschlempe
- DS1, DS2: Teilfraktionen einer Dünnschlempe
- O: Öl
- R: Flüssigkeit
- F: proteinhaltiger Feststoff
- 1.1: Bereitstellen Sirup
- 1.2: Einstellen Zulaufmenge
- 1.3: Protein
- 1.4: Ölphase
- 1.5: Feststoff

- 3.1: Vorlagebehälter
- 3.2: Arbeitsbehälter
- 3.3: Retentat
- 3.4: Permeat
- 3.5: Retentat-Teilvolumenstrom
- 3.6: Schwere Phase
- 3.7: Ölphase
- 3.8: Protein / Feststoffphase
- 3.9: Retentat-Teilvolumenstrom

## Patentansprüche

1. Verfahren zur Gewinnung von Öl (O) aus Dünnschlempe (DS) in einer Vorrichtung (10) zur Verarbeitung von Dünnschlempe (DS), wobei das Verfahren **gekennzeichnet ist durch die folgenden Schritte:**
a) Zuführen von Dünnschlempe (DS) in einen Arbeitsbehälter (2) der Vorrichtung (1)
b) Aufkonzentrieren von Dünnschlempe (DS) in einer Filtrationsanlage (4) der Vorrichtung (10);
c) wobei nach dem Aufkonzentrieren von Dünnschlempe (DS) eine zentrifugale Trennung zumindest eines Teilstroms (DS2) der aufkonzentrierten Dünnschlempe in drei Phasen erfolgt, umfassend eine proteinhaltige Feststoffphase (F), eine Ölphase (O) und eine wässrige Flüssigphase (R),
wobei die zentrifugale Trennung durch einen Dreiphasen-Separators (8) erfolgt, und
wobei die wässrige Flüssigphase (R) nach Schritt c) in den Arbeitsbehälter (2) zurückgeführt wird, derart, dass eine Gewinnung von Öl (O) mit einer Ölausbeute von mehr als 99,5 Gew.%, bezogen auf den Ölgehalt in der eingesetzten Dünnschlempe (DS), erfolgt.

2. Verfahren nach Anspruch 1, **dadurch gekennzeichnet, dass** das Zuführen von Dünnschlempe (DS) in Schritt a) in einen Arbeitsbehälter (2) erfolgt, wobei nach dem Aufkonzentrieren von Dünnschlempe in Schritt b) eine Strömungsteilung der aufkonzentrierten Dünnschlempe in zumindest einen ersten Teilstrom (DS1) und einen zweiten Teilstrom (DS2) erfolgt, wobei im Anschluss an die Strömungsteilung ein Rückführen des ersten Teilstroms (DS1) an aufkonzentrierter Dünnschlempe zu der in den Arbeitsbehälter (2) befindlichen Dünnschlempe (DS) zur Einstellung eines Gehaltes an Trockensubstanz erfolgt.

3. Verfahren nach Anspruch 1 oder 2, **dadurch gekennzeichnet, dass** die zentrifugale Trennung in Schritt c) in einem einzigen Schritt erfolgt und mittels des Dreiphasen-Separators (8) durchgeführt wird.

4. Verfahren nach einem der vorhergehenden Ansprüche, **dadurch gekennzeichnet, dass** die Temperatur der Dünnschlempe (DS2) während der zentrifugalen Trennung in Schritt c) zwischen 70 und 90°C besonders bevorzugt zwischen 80-83 °C beträgt.

5. Verfahren nach einem der vorhergehenden Ansprüche, **dadurch gekennzeichnet, dass** das Aufkonzentrieren in Schritt b) durch eine Filtration, vorzugsweise durch eine Ultrafiltration, insbesondere durch eine Ultrafiltration mit Hilfe einer keramischen Filtermembran, erfolgt, wobei die Temperatur der Dünnschlempe (DS) während der Filtration zwischen 70 und 90°C besonders bevorzugt zwischen 80-83°C beträgt.

6. Verfahren nach einem der vorhergehenden Ansprüche, **dadurch gekennzeichnet, dass** der Dreiphasen-Separator (8) zur zentrifugalen Trennung in Schritt c) ein Tellerpaket aufweist.

7. Verfahren nach einem der vorhergehenden Ansprüche, **dadurch gekennzeichnet, dass** der Dreiphasen-Separator (8) zur zentrifugalen Trennung in Schritt c) eine äquivalente Klärfläche von 2.000 bis 200.000 m² aufweist.

8. Verfahren nach einem der vorhergehenden Ansprüche, **dadurch gekennzeichnet, dass** der Dreiphasen-Separator (8) zur zentrifugalen Trennung in Schritt c) bei einer G-Zahl zwischen 1.500 und 15.000 betrieben wird.

9. Verfahren nach einem der vorhergehenden Ansprüche, **dadurch gekennzeichnet, dass** bei der zentrifugalen Trennung in Schritt c) eine diskontinuierliche Entleerung von Feststoffen erfolgt.

10. Verfahren nach Anspruch 9, **dadurch gekennzeichnet, dass** zur Steuerung der diskontinuierlichen Entleerung der Feststoffgehalt in der Ölphase (O) und/oder in der geklärten wässrigen Flüssigphase (R) überwacht wird, oder die Trübung in zumindest einer der vorgenannten Phasen, insbesondere durch Anordnung z.B. eines optischen Sensors in einem Ablauf des Separators (8), überwacht wird.

11. Verfahren nach Anspruch 9 oder 10, **dadurch gekennzeichnet, dass** Protein als weiterer Wertstoff aus der proteinhaltigen Feststoffphase (F) gewonnen wird.

12. Verwendung einer Vorrichtung (10) zur Durchführung eines Verfahrens nach einem der vorgenannten Ansprüche, zur Gewinnung von Öl (O) mit einer Ölausbeute von mehr als 99,5 Gew.%, bezogen auf den Ölgehalt in der eingesetzten Dünnschlempe (DS), wobei die Vorrichtung (10) zumindest eine Ultrafiltrationsanlage und einen der Filtrationsanlage nachgeschalteten Dreiphasen-Separator (8) umfasst.
